# EUROPEAN PATENT SPECIFICATION

(11) **EP 3 481 127 B1**
(45) Date of publication and mention of the grant of the patent: **23.10.2024**
(21) Application number: 17199931.1
(22) Date of filing: 03.11.2017
(51) Int. Cl.: H04W 74/0833

(54) **TIME DIVISION MULTIPLE ACCESS COMMUNICATION NETWORK AND METHOD FOR PERFORMING COLLISION DETECTION AND/OR A TIME SLOT RESERVATION INDICATION**
ZEITMULTIPLEX-MEHRFACHZUGANGSKOMMUNIKATIONSNETZ UND VERFAHREN ZUR DURCHFÜHRUNG EINER KOLLISIONSERKENNUNG UND/ODER EINER ZEITSCHLITZRESERVIERUNGSANZEIGE
RÉSEAU DE COMMUNICATION À ACCÈS MULTIPLE PAR RÉPARTITION DANS LE TEMPS ET PROCÉDÉ POUR EFFECTUER UNE DÉTECTION DE COLLISION ET / OU UNE INDICATION DE RÉSERVATION DE CRÉNEAU TEMPOREL

(43) Date of publication of application: 08.05.2019
(73) Proprietor: Rohde & Schwarz GmbH & Co. KG, 81671 München (DE)
(72) Inventor: Kerger, Stefan, 85445 Oberding Aufkirchen (DE)
(74) Representative: Novagraaf Group

(56) References cited:
- EP-A1- 2 501 069
- WO-A1-2005/015751
- WO-A1-2008/145454
- SOUVIK SEN ET AL: "CSMA/CN", PROCEEDINGS OF THE SIXTEENTH ANNUAL INTERNATIONAL CONFERENCE ON MOBILE COMPUTING AND NETWORKING, MOBICOM '10, ACM PRESS, NEW YORK, NEW YORK, USA, 20 September 2010 (2010-09-20), pages 25 - 36, XP058230040, ISBN: 978-1-4503-0181-7, DOI: 10.1145/1859995.1859999

## Description

The invention relates to a time division multiple access communication network. Further, the invention relates to a method for performing collision detection and/or a time slot reservation indication in a time division multiple access communication network.

In the state of the art, time division multiple access communication networks as well as the respective methods are known that generally relate to channel access methods for wireless transmission. The general purpose of a time division multiple access is to enable several nodes to transmit data on the same frequency channel wherein the corresponding frequency channel is divided into frames that in turn are divided into time slots which might be occupied by the several nodes.

A problem encountered by these networks and methods corresponds to detecting a collision of several transmissions occurring simultaneously, in particular within the same time slot, and to avoid such collisions in a most efficient manner. Actually, an occurring collision is detected in the application layer of the respective telecommunication standard according to the Open System Interconnection Model (OSI Model). This, however, provokes time outs and/or confirmations to be processed which result in longer transmission times while reducing the available data rate massively.

In the time division multiple access communication networks and their respective methods according to the state of the art, a present data transmission has to be interrupted in order to be enabled to detect another occurring transmission. The data transmission in the time slot affected has to be transmitted again. Thus, the corresponding bandwidth of the wireless transmission channel is reduced.

WO 2005/015751 A1 describes a communication system using its own communication protocol in order to provide a collision detection of simultaneous data transmission. According to the communication protocol, a coded portion indicating the start of data transmission and an associated end of data marker indicating the end of data transmission for each frame are used. A receiver receiving two different data streams is enabled to detect a collision of simultaneous data transmission when two coded portions indicating the start of data transmission are received subsequently.

The paper "CSMA/CN" by Souvik Sen et al discloses a communication network in which a receiving node detects colliding transmissions and issues a collision notification to be received by a transmitter. The transmitter receiving the collision notification aborts its transmission that is continued if no transmission occurs.

It is an object of the present invention to improve the time division multiple access communication networks with regard to collision detection such that the data rate can be substantially maintained.

The invention provides a time division multiple access communication network with collision detection, wherein the network comprises at least two transmitting nodes and at least one receiving node that has a correlation receiver for signaling, wherein at least one of the transmitting nodes provides a respective predefined signal pattern for signaling, wherein the receiving node is configured to detect one or more incoming transmissions based on correlation of the predefined signal pattern received, wherein the receiving node is configured to indicate more than one colliding transmissions to all other nodes of the network. At least one of the transmission nodes is configured to stop transmission due to reception of a collision information. The receiving node is configured to indicate at least one valid transmission to all other nodes of the network, wherein the receiving node is configured to send a first signal pattern indicating the at least one valid transmission, which informs the other transmission nodes and blocks at least one respective time slot ensuring that no collision will occur in the appropriate time slot. The at least one transmission node, which stopped transmission, is configured to reinitiate transmission after a certain time after stopping transmission. The respective transmission nodes involved in the collision are configured to use different back off values or times ensuring that the collision is avoided in the future.

Further, the invention provides a method for performing collision detection in a time division multiple access communication network comprising at least two transmitting nodes and at least one receiving node, with the following steps:
- Receiving at least one transmission signal with a predefined signal pattern of one of the transmitting nodes via the receiving node,
- Detecting one or more incoming transmissions based on correlation of the predefined signal pattern received,
- Indicating more than one colliding transmissions to all other nodes of the network,
- Indicating at least one valid transmission to all other nodes of the network, wherein the receiving node transmits a first signal pattern to all other nodes of the network, which indicates the at least one valid transmission, and wherein the first signal pattern informs the other transmission nodes and blocks at least one respective time slot ensuring that no collision will occur in the appropriate time slot, and
- wherein at least one of the transmission nodes stops transmission due to reception of a collision information, wherein the at least one transmission node, which stopped transmission, reinitiates the transmission after a certain time after stopping transmission, and wherein the respective transmission nodes involved in the collision use different back off values or times ensuring that the collision is avoided in the future.

The invention is based on the finding that the at least one receiving node can be used to provide information to all participants of the network, in particular the several transmission nodes, with regard to the current status of the signaling. Therefore, the receiving node distributes the information according to which a valid transmission of one of the transmission nodes is currently performed. Furthermore, the predefined signal pattern is taken into account in order to detect a valid transmission and/or colliding transmission within a certain time slot.

Particularly, the at least two transmitting nodes each provide a respective predefined signal pattern for signaling wherein the receiving node is configured to detect one or more incoming transmissions based on correlation of the predefined signal patterns received.

The different (individual) signal patterns are taken into account in order to determine the number of streams occurring within the same time slot, namely simultaneously. Provided that two or more streams (transmissions) are detected within the same time slot, a collision indication is outputted and distributed among the participants of the network.

In fact, the receiving node correlates with all predefined signal patterns of the transmission nodes of the system such that colliding transmissions can be detected by the receiving node appropriately.

In order to break up the collision detected, at least one of the transmission nodes involved in the collision stops its transmission appropriately. For instance, all transmission nodes involved stop their respective transmissions.

The transmissions occurring a collision may relate to requests of the respective transmission nodes to send data packages wherein these requests occur simultaneously, in particular in the same time slot.

Particularly, the at least one transmission node is configured to reinitiate transmission after a certain time after stopping transmission. This ensures that the data to be sent will be send afterwards such that no data gets lost. In fact, the data transmission is only postponed to a time that ensures no colliding transmissions.

The collision detected can be broken up appropriately when at least one of the transmission nodes involved in the collision stops its transmission. For instance, all transmission nodes involved stop the corresponding transmissions. The reinitiating ensures that the data to be sent will be send afterwards such that no data gets lost. In fact, the transmission is only postponed to a time that ensures no colliding transmissions.

This first signal pattern is sent out as soon as a request, a data stream or anything else from a transmission node with regard to a transmission is detected such that the other transmission nodes of the network are informed about the (upcoming) transmission. The first signal pattern shall inform the other transmission nodes and, preferably, block respective time slot(s).

According to an aspect, the receiving node, in particular the correlation receiver, comprises a threshold metric that is configured to determine at least one of the number of simultaneous transmissions and a collision of transmissions. The threshold metric receives the signals received by the receiving node and processes them appropriately. Thus, the number of simultaneous signals, in particular the ones from different transmission nodes, can be separated in order to determine the number of simultaneous transmissions. Two simultaneous transmissions already relate to a collision as two colliding transmission occur within the same time slot.

Moreover, the receiving node may be configured to send a second signal pattern indicating colliding transmissions of at least two transmission nodes. As already described, the receiving node correlates with all predefined signal patterns of the several transmission nodes such that the receiving node can detect the occurrence of a collision. By informing the transmission nodes of the network with regard to a collision detected, the transmission nodes may change their status in order to dissolve the collision occurred.

This collision information may accompany with a new requesting phase for the respective transmission nodes for establishing a transmission.

According to another aspect, the certain time is of random length based on multiple reservation times. The random length relates to a back off value based on a pseudo-random process.

The different back off times may correspond to different time slots.

A first back off time for the first transmission node ensures that only this first transmission node transmits the appropriate signal in the time slot intended again. The other transmission nodes are informed by the receiving node appropriately, in particular via the first signal pattern sent. Accordingly, the other transmission nodes receive the information that the appropriate time slot is used by the first transmission node.

This information is sent out as long as the transmission is ongoing such that the appropriate time slot becomes available once the transmission of the first transmission node has finished.

Accordingly, a new requesting phase being robust is ensured as the transmission nodes involved in the collision transmit their (new) requests at different times due to the certain times (of random length based on multiple reservation times). The first of the several transmission nodes involved in the collision will establish a connection with the receiving node such that the receiving node informs the other transmission nodes about the (valid) transmission ensuring that no collision will occur in the appropriate time slot.

For instance, the network is configured to execute a frequency hopping method. With regard to the method, a frequency hopping method is executed. Accordingly, the collision may be break up by using different carrier frequencies provided that this is possible within the transmission channel. The frequency hopping may also be based on a pseudo-random process.

Another aspect provides that at least one of the receiving node and the transmission node is configured to indicate a collision to a user of the network. Thus, the user of the network gets informed about a collision detected. Moreover, the user may also be informed that the collision has broken up appropriately.

Another embodiment provides that the correlation receiver is configured to process data communication. Thus, the data transmission is also done by the respective receiver. Hence, the receiver is not only intended for establishing the respective transmissions, but also for processing the appropriate data.

According to an embodiment, the network is a mobile ad-hoc network and/or a multi hop network. The mobile ad-hoc network, also called MANET, has no fixed wireless infrastructure as it is a continuously self-configuring network of mobile devices that are connected with each other wirelessly. The connections are direct connections between the participants or through multiple hop relays. Multi hop networks, comprising (additional) relays, improve the transmission range, throughput and coverage. In such networks, the connections are changed frequently which generally increases the risk of collisions.

According to an aspect, the receiving node transmits a second signal pattern indicating colliding transmissions of at least two transmission nodes. As already described, the receiving node correlates with all predefined signal patterns of the several transmission nodes such that the receiving node can inform the transmission nodes of the network with regard to a collision detected. This collision information may accompany with a new requesting phase for the respective transmission nodes for establishing a transmission.

The invention will now be described with reference to a preferred embodiment which is shown in the enclosed drawings. In the drawings,
- Figure 1 schematically shows a time division multiple access communication network according to the invention;
- Figure 2 shows a detail of the receiver node of Figure 1 in a schematic overview, and
- Figure 3 shows a schematic representation of a method for performing collision detection and/or a time slot reservation indication in a time division multiple access communication network according to the invention.

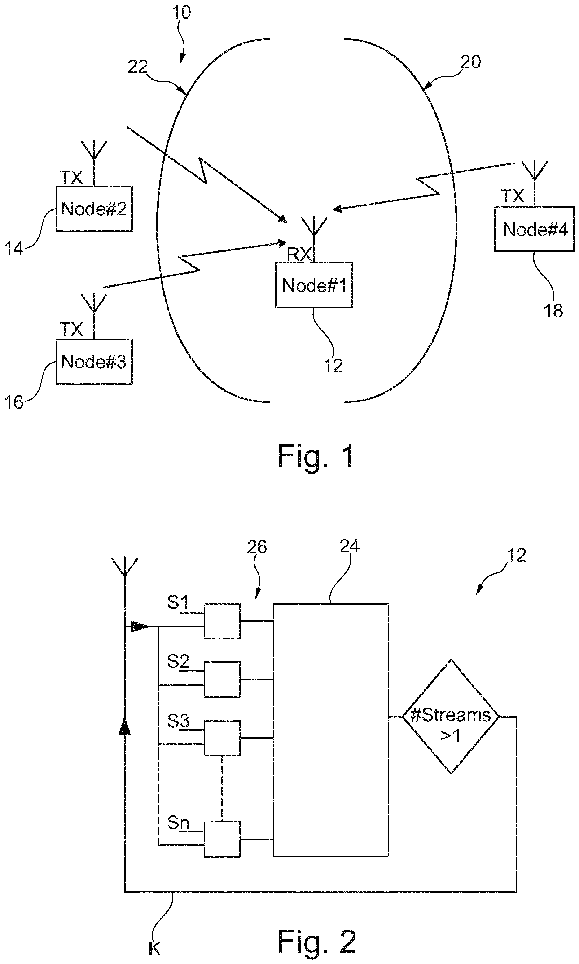

The invention made is disclosed in the embodiment referring to Figure 1.

In Figure 1, a time division multiple access communication network 10 is shown that comprises a receiving node 12 and three transmission nodes 14, 16, 18 wherein the range 20 of the first and second transmission nodes 14, 16 as well as the range 22 of the third transmission node 18 are also indicated.

As shown in Figure 1, the third transmission node 18 is a hidden node for the first and second transmission nodes 14, 16 due to the ranges 20, 22.

The receiving node 12 receives the transmission signals of all transmission nodes 14, 16, 18 wherein the signals received are processed by an internal correlation receiver 24 that comprises a threshold metric 26 as shown in Figure 2 illustrating the receiving node 12 in more detail.

The correlation receiver 24 receives the different signals (streams S1 to Sn) and processes the appropriate data in order to detect different transmission, in particular different transmission occurring simultaneously (#Streams < 1).

For this purpose, the threshold metric 26 is used that correlates the different (predefined) signal patterns for signaling of the transmission nodes 14, 16, 18, namely the different streams S1 to Sn. As the receiving node 12 correlates with the signal patterns for signaling of all transmission nodes 14, 16, 18, the receiving node 12 is enabled to dissolve an occurring collision of more than one transmission signals.

In other words, the correlation receiver 24, in particular the threshold metric 26, takes the different signal patterns of the transmission nodes 14, 16, 18 into account in order to determine the number of transmission signals (streams) occurring simultaneously, in particular within a certain time slot.

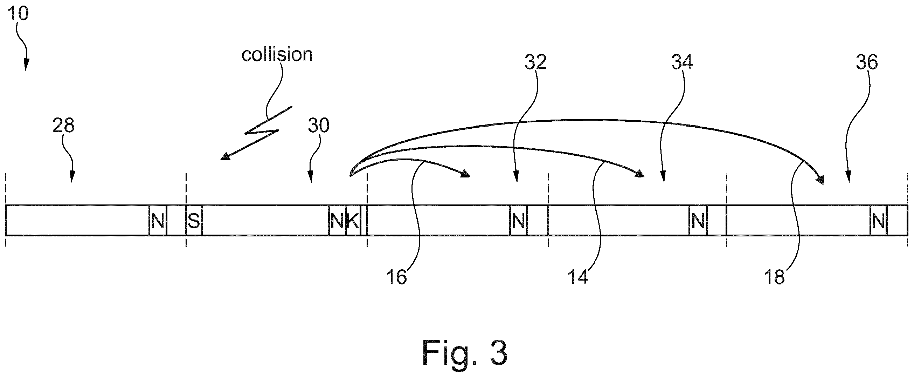

In Figure 3, a schematic overview is shown that represents a method for performing collision detection and/or a time slot reservation indication in a time division multiple access communication network 10 as shown in Figure 1. In the shown embodiment, a collision between the second and the third nodes 16, 18 occurs as will be described hereinafter.

In a first time slot 28 of the transmission shown, the receiving node 12 sends out a signal pattern indicating the status of the currently transmissions. This signal pattern is indicated by "N". The appropriate signal (pattern) informs the other transmission nodes 14, 16 appropriately. The signal pattern indicated by "N" is always sent once the receiving node 12 detects an incoming signal, for instance a request.

At the beginning of the second time slot 30, a synchronization pattern S is used to detect a collision of at least two colliding transmissions. This can be done as the receiving node 12 correlates with all possible signal patterns such that a collision of two different transmission nodes 14, 16 can be determined appropriately.

In the second time slot 30, a collision is detected in a certain time slot. Accordingly, the receiving node 12 emits a collision pattern which is labeled by "K" as shown in Figures 2 and 3. The collision pattern K corresponds to a second signal pattern sent out by the receiving node 12.

The respective collision pattern K is received by the transmission nodes 14, 16, 18 of the network 10 and processed appropriately.

The transmission nodes 14, 16 transmitting signals in this time slot stop their transmissions due to reception of the collision information, namely the collision pattern K.

Further, the collision pattern K indicates to the transmission nodes 14, 16, 18 that a new request phase has to be initiated after a certain time after stopping the respective transmission.

This will be done based on a pseudo-random process wherein new back off values for the time slots are generated, in particular for following time slots, for instance subsequent time slots.

This pseudo-random process causes the different transmission nodes 14, 16, 18 to initiate their request at different times due to the different back off values ensuring that only one of the different transmission nodes 14, 16, 18 tries to establish a connection with the receiving node 12 at a certain time slot as shown for the third time slot 32. In general, the certain time is of random length based on multiple reservation times.

Thus, the third time slot 32 is used by the third node 16, for instance, for the new attempt to establish a connection with the receiving node 12.

Therefore, the receiving node 12 sends out a first signal pattern indicating the at least one valid transmission with the third node 16 in the respective time slot(s) such that all transmission nodes 14, 16, 18 are informed about the occurring transmission.

As indicated in the fourth time slot 34 and the fifth time slot 36, the first node 14 and the fourth node 18 would try to establish a connection later due to the different back off values. However, these connections will not be established due to the connection already established with the third node 16 before in the third time slot 32 until this transmission has been finished.

Accordingly, the collision occurring in the second time slot 30 has been dissolved appropriately.

Furthermore, hidden nodes such as the fourth node 18 can be handled by the network 10 appropriately.

In addition, the network 10 may be configured to execute a frequency hopping method simultaneously such that the carrier frequency is altered. This may also be based on a pseudo-random process.

Once, a collision has been detected and the respective collision pattern K, namely the second signal pattern, is sent out by the receiving node 12 (and received by the transmission nodes 14, 16, 18), at least one of the receiving node 12 and the transmission nodes 14, 16, 18 may inform the user of the system 10 with regard to the occurrence of a collision.

The correlation receiver 24 used for determining the number of simultaneous transmission and/or collisions may also be configured to process data streams of the respective transmission nodes 14, 16, 18 once a data transmission has been established such that the appropriate data can be processed by the receiving node 12.

In general, the network 10 may be a mobile ad-hoc network and/or a multi hop network which usually comprise participants frequently changing their transmission properties.

Accordingly, a time division multiple access communication network 10 is provided that has a collision detection and a time slot reservation indication wherein the different transmission nodes 14, 16, 18 are informed appropriately such that collisions are dissolved rapidly and avoided in the future due to the indication of at least one valid transmission and/or colliding transmissions by using the first signal pattern and/or the second signal pattern respectively.

## Claims

1. A time division multiple access communication network (10) with collision detection, wherein the network (10) comprises at least two transmitting nodes (14, 16, 18) and at least one receiving node (12) that has a correlation receiver (24) for signaling, wherein at least one of the transmitting nodes (14, 16, 18) provides a respective predefined signal pattern for signaling, wherein the receiving node (12) is configured to detect one or more incoming transmissions based on correlation of the predefined signal pattern received, wherein the receiving node (12) is configured to indicate more than one colliding transmissions to all other nodes (14, 16, 18) of the network (10), and wherein at least one of the transmission nodes (14, 16, 18) is configured to stop transmission due to reception of a collision information, **characterized in that** the receiving node (12) is configured to indicate at least one valid transmission to all other nodes (14, 16, 18) of the network (10), wherein the receiving node (12) is configured to send a first signal pattern indicating the at least one valid transmission, which informs the other transmission nodes (14, 16, 18) and blocks at least one respective time slot ensuring that no collision will occur in the appropriate time slot, **characterized in that** the at least one transmission node (14, 16, 18), which stopped transmission, is configured to reinitiate transmission after a certain time after stopping transmission, and wherein the respective transmission nodes (14, 16, 18) involved in the collision are configured to use different back off values or times ensuring that the collision is avoided in the future.

2. The time division multiple access communication network (10) according to claim 1, **characterized in that** the receiving node (12), in particular the correlation receiver (24), comprises a threshold metric (26) that is configured to determine at least one of the number of simultaneous transmissions and a collision of transmissions.

3. The time division multiple access communication network (10) according to any of the preceding claims, **characterized in that** the receiving node (12) is configured to send a second signal pattern indicating colliding transmissions of at least two transmission nodes (14, 16, 18).

4. The time division multiple access communication network (10) according to any of the preceding claims, **characterized in that** the certain time is of random length based on multiple reservation times.

5. The time division multiple access communication network (10) according to any of the preceding claims, **characterized in that** the network (10) is configured to execute a frequency hopping method.

6. The time division multiple access communication network (10) according to any of the preceding claims, **characterized in that** at least one of the receiving node (12) and the transmission node (14, 16, 18) is configured to indicate a collision to a user of the network (10).

7. The time division multiple access communication network (10) according to any of the preceding claims, **characterized in that** the correlation receiver (24) is configured to process data communication.

8. The time division multiple access communication network (10) according to any of the preceding claims, **characterized in that** the network (10) is a mobile ad-hoc network and/or a multi hop network.

9. A method for performing collision detection in a time division multiple access communication network (10) comprising at least two transmitting nodes (14, 16, 18) and at least one receiving node (12), with the following steps:
- Receiving at least one transmission signal with a predefined signal pattern of one of the transmitting nodes (14, 16, 18) via the receiving node (12),
- Detecting one or more incoming transmissions based on correlation of the predefined signal pattern received,
- Indicating at least one valid transmission and/or more than one colliding transmissions to all other nodes (14, 16, 18) of the network (10),
- Indicating at least one valid transmission to all other nodes (14, 16, 18) of the network (10), wherein the receiving node (12) transmits a first signal pattern to all other nodes (14, 16, 18) of the network (10), which indicates the at least one valid transmission, and wherein the first signal pattern informs the other transmission nodes (14, 16, 18) and blocks at least one respective time slot ensuring that no collision will occur in the appropriate time slot, and
**characterized in that**
- at least one of the transmission nodes (14, 16, 18) stops transmission due to reception of a collision information, wherein the at least one transmission node (14, 16, 18) , which stopped transmission, reinitiates the transmission after a certain time after stopping transmission, and wherein the respective transmission nodes (14, 16, 18) involved in the collision use different back off values or times ensuring that the collision is avoided in the future.

10. The method according to claim 9, **characterized in that** the receiving node (12) transmits a second signal pattern indicating colliding transmissions of at least two transmission nodes (14, 16, 18).

11. The method according to claim 9 or 10, **characterized in that** a frequency hopping method is executed.

## Patentansprüche

1. Zeitmultiplexzugriffskommunikationsnetzwerk (10) mit Kollisionserfassung, wobei das Netzwerk (10) mindestens zwei Übertrageknoten (14, 16, 18) und mindestens einen Empfangsknoten (12) umfasst, der einen Korrelationsempfänger (24) für ein Signalisieren aufweist, wobei mindestens einer der Übertrageknoten (14, 16, 18) ein jeweiliges vordefiniertes Signalmuster zum Signalisieren bereitstellt, wobei der Empfangsknoten (12) konfiguriert ist, um eine oder mehrere eingehende Übertragungen basierend auf der Korrelation des vordefinierten empfangenen Signalmusters zu erfassen, wobei der Empfangsknoten (12) konfiguriert ist, um mehr als eine kollidierende Übertragungen allen anderen Knoten (14, 16, 18) des Netzwerks (10) anzuzeigen, und wobei mindestens einer der Übertragungsknoten (14, 16, 18) konfiguriert ist, um die Übertragung aufgrund eines Empfangs einer Kollisionsinformation zu stoppen,
**dadurch gekennzeichnet, dass** der Empfangsknoten (12) konfiguriert ist, um mindestens eine gültige Übertragung allen anderen Knoten (14, 16, 18) des Netzwerks (10) anzuzeigen, wobei der Empfangsknoten (12) konfiguriert ist, um ein erstes Signalmuster zu senden, das die mindestens eine gültige Übertragung anzeigt, die die anderen Übertragungsknoten (14, 16, 18) informiert und mindestens einen jeweiligen Zeitschlitz blockiert, wobei sichergestellt wird, dass keine Kollision in dem geeigneten Zeitschlitz auftritt,
**dadurch gekennzeichnet, dass** der mindestens eine Übertragungsknoten (14, 16, 18), der die Übertragung stoppt, konfiguriert ist, um die Übertragung nach einer bestimmten Zeit nach dem Stoppen der Übertragung erneut einzuleiten, und wobei die jeweiligen Übertragungsknoten (14, 16, 18), die an der Kollision beteiligt sind, konfiguriert sind, um unterschiedliche Backoff-Werte oder -Zeiten zu verwenden, die sicherstellen, dass die Kollision in der Zukunft vermieden wird.

2. Zeitmultiplexzugriffskommunikationsnetzwerk (10) nach Anspruch 1, **dadurch gekennzeichnet, dass** der Empfangsknoten (12), insbesondere der Korrelationsempfänger (24), eine Schwellenmetrik (26) umfasst, die konfiguriert ist, um mindestens eines von der Anzahl gleichzeitiger Übertragungen und einer Kollision von Übertragungen zu bestimmen.

3. Zeitmultiplexzugriffskommunikationsnetzwerk (10) nach einem der vorstehenden Ansprüche, **dadurch gekennzeichnet, dass** der Empfangsknoten (12) konfiguriert ist, um ein zweites Signalmuster zu senden, das kollidierende Übertragungen von mindestens zwei Übertragungsknoten (14, 16, 18) anzeigt.

4. Zeitmultiplexzugriffskommunikationsnetzwerk (10) nach einem der vorstehenden Ansprüche, **dadurch gekennzeichnet, dass** die bestimmte Zeit eine zufällige Länge basierend auf mehreren Reservierungszeiten aufweist.

5. Zeitmultiplexzugriffskommunikationsnetzwerk (10) nach einem der vorstehenden Ansprüche, **dadurch gekennzeichnet, dass** das Netzwerk (10) konfiguriert ist, um ein Frequenzsprungverfahren auszuführen.

6. Zeitmultiplexzugriffskommunikationsnetzwerk (10) nach einem der vorstehenden Ansprüche, **dadurch gekennzeichnet, dass** mindestens einer des Empfangsknotens (12) und des Übertragungsknotens (14, 16, 18) konfiguriert ist, um eine Kollision einem Benutzer des Netzwerks (10) anzuzeigen.

7. Zeitmultiplexzugriffskommunikationsnetzwerk (10) nach einem der vorstehenden Ansprüche, **dadurch gekennzeichnet, dass** der Korrelationsempfänger (24) konfiguriert ist, um die Datenkommunikation zu verarbeiten.

8. Zeitmultiplexzugriffskommunikationsnetzwerk (10) nach einem der vorstehenden Ansprüche, **dadurch gekennzeichnet, dass** das Netzwerk (10) ein mobiles Ad-hoc-Netzwerk und/oder ein Multi-hop-Netzwerk ist.

9. Verfahren zum Durchführen einer Kollisionserfassung in einem Zeitmultiplexzugriffskommunikationsnetzwerk (10), umfassend mindestens zwei Übertrageknoten (14, 16, 18) und mindestens einen Empfangsknoten (12), mit den folgenden Schritten:
- Empfangen mindestens eines Übertragungssignals mit einem vordefinierten Signalmuster eines der Übertrageknoten (14, 16, 18) über den Empfangsknoten (12),
- Erfassen einer oder mehrerer eingehender Übertragungen basierend auf der Korrelation des vordefinierten empfangenen Signalmusters,
- Anzeigen mindestens einer gültigen Übertragung und/oder mehr als einer kollidierenden Übertragung allen anderen Knoten (14, 16, 18) des Netzwerks (10),
- Anzeigen mindestens einer gültigen Übertragung allen anderen Knoten (14, 16, 18) des Netzwerks (10), wobei der Empfangsknoten (12) ein erstes Signalmuster an alle anderen Knoten (14, 16, 18) des Netzwerks (10) überträgt, das die mindestens eine gültige Übertragung anzeigt, und wobei das erste Signalmuster die anderen Übertragungsknoten (14, 16, 18) informiert und mindestens einen jeweiligen Zeitschlitz blockiert, wobei sichergestellt wird, dass keine Kollision in dem geeigneten Zeitschlitz auftritt, und
**dadurch gekennzeichnet, dass**
- mindestens einer der Übertragungsknoten (14, 16, 18) die Übertragung aufgrund des Empfangs einer Kollisionsinformation stoppt, wobei der mindestens eine Übertragungsknoten (14, 16, 18), der die Übertragung stoppt, die Übertragung nach einer bestimmten Zeit nach dem Stoppen der Übertragung erneut einleitet, und wobei die jeweiligen Übertragungsknoten (14, 16, 18), die an der Kollision beteiligt sind, unterschiedliche Backoff-Werte oder -Zeiten verwenden, die sicherstellen, dass die Kollision in der Zukunft vermieden wird.

10. Verfahren nach Anspruch 9, **dadurch gekennzeichnet, dass** der Empfangsknoten (12) ein zweites Signalmuster überträgt, das kollidierende Übertragungen von mindestens zwei Übertragungsknoten (14, 16, 18) anzeigt.

11. Verfahren nach Anspruch 9 oder 10, **dadurch gekennzeichnet, dass** ein Frequenzsprungverfahren ausgeführt wird.

## Revendications

1. Réseau de communication à accès multiple par répartition dans le temps (10) avec détection de collision, dans lequel le réseau (10) comprend au moins deux noeuds de transmission (14, 16, 18) et au moins un noeud de réception (12) qui a un récepteur de corrélation (24) à des fins de signalisation, dans lequel au moins l'un des noeuds de transmission (14, 16, 18) fournit un motif de signal prédéfini respectif à des fins de signalisation, dans lequel le noeud de réception (12) est configuré pour détecter une ou plusieurs transmissions entrantes sur la base d'une corrélation du motif de signal prédéfini reçu, dans lequel le noeud de réception (12) est configuré pour indiquer plus d'une transmission en collision à tous les autres noeuds (14, 16, 18) du réseau (10), et dans lequel l'au moins un des noeuds de transmission (14, 16, 18) est configuré pour arrêter une transmission en raison de la réception d'une information de collision, **caractérisé en ce que** le noeud de réception (12) est configuré pour indiquer au moins une transmission valide à tous les autres noeuds (14, 16, 18) du réseau (10), dans lequel le noeud de réception (12) est configuré pour envoyer un premier motif de signal indiquant l'au moins une transmission valide, qui informe les autres noeuds de transmission (14, 16, 18) et bloque au moins un créneau temporel respectif ce qui assure qu'aucune collision ne se produira dans le créneau temporel approprié, **caractérisé en ce que** l'au moins un noeud de transmission (14, 16, 18), qui a arrêté la transmission, est configuré pour relancer une transmission au bout d'un certain temps après l'arrêt de la transmission, et dans lequel les noeuds de transmission respectifs (14, 16, 18) impliqués dans la collision sont configurés pour utiliser des valeurs ou des temps de repli différents ce qui assure que la collision sera évitée à l'avenir.

2. Réseau de communication à accès multiple par répartition dans le temps (10) selon la revendication 1, **caractérisé en ce que** le noeud de réception (12), en particulier le récepteur de corrélation (24), comprend une métrique de seuil (26) qui est configurée pour déterminer au moins l'un parmi le nombre de transmissions simultanées et une collision de transmissions.

3. Réseau de communication à accès multiple par répartition dans le temps (10) selon l'une quelconque des revendications précédentes,
**caractérisé en ce que** le noeud de réception (12) est configuré pour envoyer un second motif de signal indiquant que des transmissions d'au moins deux noeuds de transmission (14, 16, 18) sont en collision.

4. Réseau de communication à accès multiple par répartition dans le temps (10) selon l'une quelconque des revendications précédentes,
**caractérisé en ce que** le certain temps a une longueur aléatoire sur la base de temps de réservation multiples.

5. Réseau de communication à accès multiple par répartition dans le temps (10) selon l'une quelconque des revendications précédentes,
**caractérisé en ce que** le réseau (10) est configuré pour exécuter un procédé à sauts de fréquence.

6. Réseau de communication à accès multiple par répartition dans le temps (10) selon l'une quelconque des revendications précédentes,
**caractérisé en ce que** l'au moins un parmi le noeud de réception (12) et le noeud de transmission (14, 16, 18) est configuré pour indiquer une collision à un utilisateur du réseau (10).

7. Réseau de communication à accès multiple par répartition dans le temps (10) selon l'une quelconque des revendications précédentes,
**caractérisé en ce que** le récepteur de corrélation (24) est configuré pour traiter une communication de données.

8. Réseau de communication à accès multiple par répartition dans le temps (10) selon l'une quelconque des revendications précédentes,
**caractérisé en ce que** le réseau (10) est un réseau ponctuel mobile et/ou un réseau à sauts multiples.

9. Procédé destiné à effectuer une détection de collision dans un réseau de communication à accès multiple par répartition dans le temps (10) comprenant au moins deux noeuds de transmission (14, 16, 18) et au moins un noeud de réception (12), présentant les étapes suivantes :
- La réception d'au moins un signal de transmission présentant un motif de signal prédéfini d'un des noeuds de transmission (14, 16, 18) par l'intermédiaire du noeud de réception (12),
- La détection d'une ou plusieurs transmissions entrantes sur la base d'une corrélation du motif de signal prédéfini reçu,
- L'indication d'au moins une transmission valide et/ou de plus d'une transmission en collision à tous les autres noeuds (14, 16, 18) du réseau (10), l'indication d'au moins une transmission valide à tous les autres noeuds (14, 16, 18) du réseau (10), dans lequel le noeud de réception (12) transmet un premier motif de signal à tous les autres noeuds (14, 16, 18) du réseau (10), qui indique l'au moins une transmission valide, et dans lequel le premier motif de signal informe les autres noeuds de transmission (14, 16, 18) et bloque au moins un créneau temporel respectif ce qui assure qu'aucune collision ne se produira dans le créneau temporel approprié, et
**caractérisé en ce que**
- au moins un des noeuds de transmission (14, 16, 18) arrête une transmission en raison de la réception d'informations de collision, dans lequel l'au moins un noeud de transmission (14, 16, 18), qui a arrêté la transmission, relance la transmission au bout d'un certain temps après l'arrêt de la transmission, et dans lequel les noeuds de transmission respectifs (14, 16, 18) impliqués dans la collision utilisent des valeurs ou des temps de repli différents ce qui assure que la collision sera évitée à l'avenir.

10. Procédé selon la revendication 9, **caractérisé en ce que** le noeud de réception (12) transmet un second motif de signal indiquant que des transmissions d'au moins deux noeuds de transmission (14, 16, 18) sont en collision.

11. Procédé selon la revendication 9 ou 10, **caractérisé en ce qu'**un procédé de saut de fréquence est exécuté.
